# EUROPEAN PATENT APPLICATION

(11) **EP 3 376 693 A1**
(43) Date of publication of application: **19.09.2018**
(21) Application number: 17160930.8
(22) Date of filing: 14.03.2017
(51) Int. Cl.: H04J 3/16, H04J 3/14, H04J 3/06, H04L 12/40, H04L 12/70, H04L 12/64

(54) **A METRO-ETHERNET TRANSPORT SYSTEM FOR ISOCHRONOUS TRAFFIC CLIENTS**

(71) Applicant: Nokia Solutions and Networks Oy, 02610 Espoo (FI)
(72) Inventor: GEBHARD, Ulrich, 70435 Stuttgart (DE); LEVEN, Andreas, 70435 Stuttgart (DE); SCHMALEN, Laurent, 70435 Stuttgart (DE); LAUTENSCHLAEGER, Wolfram, 70435 Stuttgart (DE); BUCHALI, Fred, 70435 Stuttgart (DE)
(74) Representative: MERH-IP Matias Erny Reichl Hoffmann Patentanwälte PartG mbB

(57) **Abstract**

This application relates to a method for transmitting at least one client data packet through an optical transmission network having multiple nodes by synchronously placing the at least one client packet in one or more containers that are routed through the network. A container is associated with a time slot allocated for transmitting the container through the network and comprises a container identification number in a container header of the container to identify the time slot associated with the container. In particular, the one or more containers have respective one or more container identification numbers arranged in sequence using a cyclic numbering scheme that repeats a same container identification number after a container cycle has been reached, so that the one or more containers are transmitted in a cyclic order of the one or more respective container identification numbers. The method comprises assigning a container identification number to a connection coupling a plurality of nodes of the network. The method also comprises providing container reservation information regarding the plurality of the nodes coupled by the connection and a corresponding container identification number associated with the connection. The method further comprises reserving at least one of the containers or portions thereof for the connection based on the container reservation information. The method also comprises transmitting the at least one client data packet using the reserved at least one of the containers or portions thereof in the optical transmission network.

## Description

### Technical Field

This application relates to optical data transmission systems, and more particularly, to methods and devices for transmitting data packets to network nodes using synchronous data aggregation.

### Background

Optical Ethernet (OE) has been designed as a lean optical packet network and as an alternative to the existing complex transport-network architecture. As a packet network, OE offers pseudo-wire encapsulation to isochronous-traffic clients (which are also referred to as Constant-Bit-Rate (CBR) clients). However, pseudo-wire transport is a compromise which requires some flexibility from the client (regarding e.g. delay or delay variation), because transmitted chunks of data arrive at variable time intervals at the receiver. It should be noted that delay and delay variation (jitter) are critical for some clients. Since the underlying synchronous transmission system of Optical Ethernet in principle allows to offer native transport of CBR clients, these constraints can be avoided. At the same time, CBR support enables seamless migration from the existing synchronous transport network (e.g. Synchronous Digital Hierarchy (SDH) and Optical Transport Hierarchy (OTH)) to the new architecture. However, the challenge is to add CBR support while keeping system complexity low.

Previous architectures supporting CBR service, known as Metropolitan Area Networks (e.g. Distributed Queue Dual Bus (DQDB) according to IEEE 802.6), apply Time-Division-Multiplexing (TDM) bus/ring media together with a Media Access Control (MAC) mechanism, which gives a node access to a certain number of slots within a given time interval, such that the desired bit rate is obtained. However, equidistant arrival of slots belonging to the same connection is not guaranteed. For example, the next arrival can be a slot earlier or later depending on the current traffic injection of upstream nodes. Re-concatenating the slots in a receive buffer to provide a synchronous bit stream to clients introduces delay which may cause damage to delay-sensitive applications. Besides, delay variation of slot arrivals leads to timing inaccuracies if timing information, e.g. Precision Time Protocol (PTP), is conveyed through the transport system, a service which is fundamental e.g. for mobile backhaul.

Thus, there is a need for a transmission mechanism to be applied in an Optical Ethernet network to reduce the above mentioned slot delay/delay variations. Moreover, in case that link failure occurs, a suitable monitoring mechanism may be desirable for efficiently tracing the synchronization status in the network and for further synchronizing or resynchronizing the nodes in the network. Such a transmission and monitoring mechanism should be preferably implemented in a flexible and low-complexity way.

### Summary

In view of these needs, the present document proposes methods and devices for transmitting data packets in an optical transmission network with an improved transmission mechanism for reducing slot/packet delay which also allows efficient synchronization monitoring of the network.

An aspect of the disclosure relates to a method for transmitting at least one client data packet through an optical transmission network, e.g. an Ethernet transport network. The optical transmission network typically comprises multiple nodes, such as a transmitting node that transmits the at least one client data packet, a receiving node that receives the at least one client data packet and a switching (intermediate or transit) node that may be located between the transmitting node and the receiving node along a transmission path in the network, and so on. Generally, the at least one client data packet may be synchronously placed in one or more containers that are routed through the network. Moreover, the network may comprise one or more links along at least two of the nodes in the network (i.e. physical links serving as a transmission path, which may connect the nodes in a bus or ring topology). The container-based transport mechanism on the network may form a unidirectional bus that connects the nodes in one direction of transmission (i.e. from one end of the bus to the other end). In embodiments, a parallel bus may be provided for transmission in the other direction, thereby providing a bidirectional network.

More specifically, a container may be associated with a time slot of the transport network allocated for transmitting the container through the network. Typically, a container includes a container header to carry important control information related to the encapsulated data packet(s), e.g. the address of a destination node to which the data packet(s) is/are directed. A container may also comprise a container identification number in the container header of the container. In particular, the container identification number may be used to identify the time slot associated with the container.

In some embodiments, the container header of the containers may be transmitted using altering (changing) header formats. In other words, headers of some containers may be transmitted using a format of a first type which may relate to a basic structure of a container header for a network (e.g. an OE network), while some other containers may be transmitted using a format of a second type which may relate to a modification of the basic container header structure. It is further appreciated that more than two different header formats may be applied for transmitting the container headers, and the container headers which use/comprise a same format type may be or may not be contiguous to each other.

Optionally, the container header of the containers may be alternated between two or more header formats. For example, the container header may have a basic format that carries the control information related to the encapsulated data packet(s) or may have one or more modified formats that also carries identification/synchronization information for the nodes in addition to the control information. Accordingly, instead of transmitting the container header using a fixed format (only the basic format), the container header may be transmitted using the basic format and the one or more modified formats (i.e. alternation of the container header between the header formats). In case that the container header format is alternated (i.e. with respect to the basic format), the container identification number for a container may be included in an alternate format (e.g. a modified format) of the container header. Thus, the container identification number may not be included in each container but only in e.g. every other container when the header is transmitted using an alternate/modified format.

In some embodiments, the one or more containers may have respective one or more container identification numbers arranged in sequence. Especially, the respective one or more container identification numbers may be arranged using a cyclic numbering scheme that repeats a same container identification number after a full container cycle has been reached, so that the one or more containers may be transmitted in a cyclic order of the one or more respective container identification numbers. One may determine a total number of containers in the container cycle based on a transmission rate on the bus, e.g. a total transmission rate at which data may be sent across the bus, and a desired traffic granularity (e.g. a minimum rate for a connection).

According to the disclosure, the method comprises assigning a container identification number to a (virtual) connection which couples a plurality of the nodes of the network (e.g. virtual circuits as performed in asynchronous transfer mode (ATM) network). The skilled person will appreciate that a bus (and its physical links) may comprise one or more such virtual connections which can be implemented logically. It is appreciated that the connection may couple an arbitrary number of the nodes of the network, and the nodes (virtually) coupled to the connection may have access to the connection, e.g. be able to receive a container sent via the connection and/or to transmit a container in the network via the connection, thereby forming a virtual (private) bus amongst the participating nodes on the optical transmission network. In some embodiments, however, only 2 nodes forming the end points of the connection use this connection to exchange data via reserved containers (possibly bidirectional in both directions using parallel buses). Other nodes in-between the end point nodes only forward the reserved containers to another node downstream in the connection, i.e. are mere transit nodes. Moreover, the connection may be a constant-bit-rate (CBR) connection or other kinds of traffic, i.e. a connection may be associated with a traffic class based on traffic contract as performed in e.g. an ATM network. The method also comprises providing container reservation information regarding the plurality of the nodes coupled by the connection (in embodiments, only the end points of the connection, e.g. a first node and a second node, are coupled by the connection) and a corresponding container identification number associated with the connection. Furthermore, the method comprises reserving at least one of the containers or portions thereof (e.g. one or more subcontainers of a container) for the connection based on the container reservation information. Once the container(s) or subcontainer(s) of the container(s) has/have been reserved, the method comprises transmitting the at least one client data packet using the reserved at least one of the containers or portions thereof in the optical transmission network via the connection. In embodiments, the client data packet(s) is/are transmitted through the network from the first node to the second node of the connection, possibly passing one or more transit nodes. In case of a CBR connection, the at least one of the containers or portions thereof (e.g. subcontainers) may be reserved for the CBR connection for transmitting the at least one client data packet with a constant bit rate from the first node to the second node.

In some embodiments, a plurality of containers in a container cycle may be reserved for the connection. When two or more containers are reserved for the connection, the containers have corresponding container identification numbers which may be uniformly distributed across the container cycle. For example, for two reserved containers, the two corresponding container identification numbers may comprise a number located at the beginning of the container cycle and a number located in the middle of the container cycle, respectively. In this way, the two corresponding container identification numbers for the two reserved containers may separate from each other by half distance of the container cycle, thereby minimizing delay times and delay variations of container/slot arrivals. In general, the reserved container identification numbers for a connection may be distributed substantially equidistant in a container cycle. However, it is appreciated that other reservation strategy to reserve two or more consecutive containers/slots may be also applicable to avoid fragmentation while keeping the delay variation minimized.

In detail, each node may maintain a counter value indicative of an expected container identification number, or of the last received container identification number. The expected container identification number may be also carried by a container which a corresponding node expects to receive next. The method may further comprise comparing the counter value with the container identification number of a received container for determining a synchronization state of a node. For example, if the received counter value does not match the expected container identification number, it may be determined that the node is not synchronized with its upstream node. On the other hand, if the received counter value matches the expected container identification number, it may be determined that the node is synchronized with its upstream node. Synchronization information regarding a downstream node may be received via e.g. the other reciprocal bus in a bidirectional network, for example in the form of flags such as up-ok, down-ok provided in a container header. Thus, synchronization states of a node can be appropriately determined.

In addition, the container header may comprise a reset bit. In case that the container header is alternated between two or more header formats, the reset bit may be included in the alternate format of the container header. The reset bit may be used to indicate a container cycle reset for initiating/restarting the sequence of the container identification numbers. During normal operation when the reset bit is not set, the method may comprise overwriting the container identification number of a received container with the counter value of the node that receives the received container. In case that the reset bit is set, the method may comprise updating the counter value of the node that receives a container with the container identification number of the received container to address lost synchronization. By this way, a new numbering sequence of the container identification numbers may be initiated/restarted so bus synchronization can be recuperated after a failure occurred anywhere on the bus.

In some embodiments, the method may also comprise selecting a main node by an appropriate control protocol to initiate a reset of the numbering sequence in one or more successive containers. Alternatively or in addition, the selected main node may be configured to set the reset bit. It should be noted that the new value of the numbering sequence may be associated with the container identification number in the received container header.

In some embodiments, the container header may comprise one or more state monitoring bits for informing other nodes whether a node sending the state monitoring bits is synchronized with its neighboring node. In case that the container header is alternated between two or more header formats, the state monitoring bits may be included in the alternate format of the container header. For example, the one or more state monitoring bits may be used by a node to inform (report to) its neighboring node(s) whether the received container identification number matches the counter value of the node for monitoring the synchronization states. According to the one or more state monitoring bits, the method may comprise updating the counter value of the node that received a container with the container identification number of the received container. Accordingly, the nodes can correctly maintain the synchronization states in the network.

In some embodiments, the method may further comprise sending offset information regarding a difference between the container identification number last received by the node and the counter value of the node at that time (or the difference between the counter value of a node and the container identification number of the container last received by the node) to one or more other (neighboring) nodes. In particular, the offset information may be sent via a control channel. Accordingly, a node which has lost synchronization with other nodes (e.g. due to failures of a link of the bus) can be immediately informed and correct its counter, thereby enabling efficient resynchronization of the asynchronous node.

Configured as above, by reserving containers (or subcontainers) based on container reservation information for transmitting the client data packets, container delay and/or container delay variation can be significantly reduced, if the reserved container identification numbers for a container are distributed (substantially) equidistant in a container cycle to have containers arrive at times of a (nearly) constant interval. The reservation information may be provided to the nodes via the control channel by the network management or by some kind of distributed signaling protocol (e.g. GMPLS). The operator may choose strategies to efficiently map client demands to container/subcontainer reservations to avoid capacity fragmentation. By further modifying the container header to carry container identification numbers, synchronization states can be easily monitored (via the comparing with the node counters). Further, adding state-monitoring information allows maintaining node synchronization as well as resynchronization in a network.

Another aspect of the disclosure relates to an apparatus for an optical transmission network for transmitting at least one client data packet through the optical transmission network. The optical transmission network may be, for example, an Ethernet transport network. The disclosed apparatus may be configured to perform the above mentioned method. As mentioned above, the optical transmission network has multiple nodes and comprises one or more links between the nodes (e.g. having a bus or ring architecture). For example, the multiple nodes may comprise a transmitting node, a receiving node and a switching (intermediate) node as mentioned above. Furthermore, the at least one client data packet may be synchronously placed in one or more containers that are routed through the network. In general, a container is associated with a time slot allocated for transmitting the container through the network, and a container includes a container header to carry, for example, the address of a destination node to which the data packet(s) is/are directed. According to the disclosure, the container may comprise a container identification number in a container header of the container so that the time slot associated with the container can be identified. More specifically, the one or more containers may have respective one or more container identification numbers arranged in sequence using a cyclic numbering scheme. In other words, a same container identification number may be repeated after a container cycle has been reached, so that the one or more containers may be transmitted in a cyclic order of the one or more respective container identification numbers.

According to the disclosure, the apparatus comprises a client interface configured to obtain the at least one client data packet and an optical output interface coupled with the optical transmission network for transmitting the at least one client data packet in the network. In general, transmission of the data packet(s) is performed using a connection that couples a plurality of the nodes of the network. In detail, one or more connections for transmitting the data packet(s) may be associated with a corresponding container identified by a container identification number, i.e. a container identification number may be assigned to the one or more connections in case of no node overlapping (nonoverlapping connections) such that reserved paths (connections) are not interfering with each other. Such information including the connection(s) as well as the container identification number(s) for container reservation (i.e. container reservation information) may be provided to the apparatus by the control plane. The apparatus also comprises a storage unit configured to store the container reservation information regarding the plurality of the nodes of the network coupled by the connection (for example a first and a second node) and a corresponding container identification number assigned to the connection.

Moreover, the apparatus comprises a processing unit configured to reserve at least one of the containers or portions thereof (e.g. one or more subcontainers of a container) for the connection coupling the plurality of the nodes of the network (for example coupling the first and the second node via the (virtual connection). In particular, the reservation may be based on the container reservation information. Subsequently, the optical output interface may be configured to transmit the at least one client data packet using the reserved at least one of the containers or portions thereof (subcontainer(s)) via the connection in the optical transmission network. It should be noted that the container cycle may be a total number of containers, and the number of containers may be determined based on a transmission rate on the one or more links forming the bus. By this way, transmission resources (i.e. containers) can be distributed between the connections in use according to link characteristics (e.g. transmission rates) in an optimal way, and the operator is enabled to choose a transmission strategy with high flexibility.

Furthermore, the connection may comprise a constant-bit-rate (CBR) connection. In this case, the at least one of the containers or portions thereof may be reserved for the CBR connection for transmitting the at least one client data packet. However, other kinds of traffic may also be considered. Also, a plurality of containers may be reserved for one connection. When a plurality of containers is reserved for the connection, corresponding container identification numbers of the containers may be uniformly distributed across the container cycle. For example, in case of two reserved containers, the two corresponding container identification numbers may comprise a number located at the beginning of the container cycle and a number located in the middle of the container cycle, respectively. In this way, the two corresponding container identification numbers for the two reserved containers may separate from each other by half distance of the container cycle, thereby minimizing delay times and delay variations of container/slot arrivals. As mentioned above, other reservation strategy to reserve two or more consecutive containers/slots may be also applicable to avoid fragmentation while keeping the delay variation minimized.

In some embodiments, the apparatus may be deposited in a node of the optical transmission network, e.g. a switching or intermediate node. The apparatus may further comprise an optical input interface coupled with the optical transmission network. The optical input interface may be configured to receive the one or more containers. More specifically, the node that receives the one or more containers may identify a connection related to the received container(s) based on the stored container reservation information and the received container identification number(s), the connection using the timeslot(s) corresponding to the container identification number(s) as transmission facility. Alternatively or in addition, the node may determine whether the received container(s) are free container(s) for some kind of traffic class that does not belong to a certain connection.

Also, the storage unit may be further configured to maintain a counter value indicative of an expected container identification number carried by a container which the node expects to receive next, or of the last received container identification number. In some embodiments, the processing unit may be further configured to compare the counter value with the container identification number of a received container for determining a synchronization state of the node. For example, the processing unit may determine that the node is not synchronized with its upstream node, in case that the counter value does not match the container identification number. Otherwise, the processing unit may determine that the node is synchronized with its neighboring node(s). By this way, synchronization states of a node can be appropriately determined based on the comparison result.

In some embodiments, the container header may also comprise a reset bit and/or one or more monitoring bits. As mentioned above, a current node (e.g. an intermediate node that includes the disclosed apparatus) may inform or report its neighboring node(s) whether the received container identification number matches the counter value using the one or more state monitoring bits to monitor the synchronization states. In case that a reset bit is set in the container header, the processing unit may be further configured to overwrite the counter value with the container identification number of a received container , in order to recuperate synchronization. In this, way, the node is enabled to initiate/restart a new numbering sequence of its counter, so that synchronization for the local node and its downstream neighbors can be recovered after a failure at the node or the bus.

Moreover, in case that one or more monitoring bits (i.e. monitoring information) are carried in the container header for determining whether the node is synchronized with its neighboring node, the processing unit may be further configured to update the counter value of the node with the container identification number of a container that is received by the node. Thereby, synchronization states in the network can be properly monitored in an efficient way, and resynchronization can be performed accordingly based on the monitoring information.

Moreover, in case that the received sequence number does not match the expected sequence number stored in the local counter, the default behavior of the node may be to overwrite the sequence number in the container with the counter value before forwarding the container to its downstream neighbors. Alternatively, in case that one or more state monitoring bits (i.e. monitoring information) carried in the header of containers received on the local bus from upstream nodes and/or on the opposite bus from downstream nodes indicate that the local node's counter is mistaken, the processing unit may be configured to update the counter value of the node with the container identification number of a received container that is received by the node. Thereby, synchronization states in the network can be properly monitored in an efficient way, and resynchronization can be performed accordingly based on the monitoring information.

In some embodiments, the optical output interface may be further configured to send offset information to one or more other nodes, the offset information representing a difference between the counter value of the node and the container identification number of the container last received by the node, or the difference between the container identification number of the last received container and the counter value of the node. More specifically, the offset information may be sent via a control channel. By sending (e.g. broadcasting) the offset information, failure in synchronization can be effectively traced, e.g. the node which has lost synchronization with other nodes can monitor the synchronization state of the other nodes and possibly identify itself as the cause of the offset and correct its counter, which enables efficient resynchronization of the nodes in the network. Alternatively or in addition, the network management system or the main node (HOB) is informed and can initiate appropriate recovery action.

In some embodiments, the container header of the containers may be alternated between two or more header formats. In this case, the container identification number for a container may be included in an alternate format of the container header of the container. Alternatively or in addition, the reset bit and the state monitoring bits may be included in the alternate format of the container header. In some embodiments, the node may be selected as a main node. In this case, the processing unit may be further configured to initiate a numbering sequence in one or more successive containers. It is appreciated that the numbering sequence may be associated with the container identification number in the container header. Alternatively or in addition, the processing unit of the main node may be configured to set the reset bit in response to lost synchronization.

Configured as above, the disclosed apparatus provides a container reservation mechanism for transmitting the client data packets where containers (or subcontainers) are reserved based on container reservation information. By means of the proposed container reservation mechanism, the container delay and/or container delay variation can be significantly reduced. The disclosed apparatus further provides a monitoring mechanism which monitors synchronization states of the nodes using a modified container header carrying container identification numbers. The disclosed apparatus allows maintaining node synchronization as well as resynchronization in a network. It is appreciated that the reservation information may be optimized or adjusted according to the transmission strategy chosen by the operator and/or parameters/characteristics of the used links. It is further appreciated that synchronization monitoring may also be achieved using monitoring information in the container header.

Implementations of the disclosed apparatus (e.g. the processing unit as mentioned above) may include using, but not limited to, one or more processor, one or more application specific integrated circuit (ASIC) and/or one or more field programmable gate array (FPGA). Implementations of the apparatus may also include using other conventional and/or customized hardware such as software programmable processors.

It will be appreciated that method steps and device features may be interchanged in many ways. In particular, the details of the disclosed devices can be implemented as a method, as the skilled person will appreciate.

### Brief Description of the Figures

Embodiments of the disclosure are explained below in an exemplary manner with reference to the accompanying drawings, wherein
**Fig. 1** illustrates a possible implementation map **100** for reserving one or more containers for a connection according to embodiments of the disclosure;
**Fig. 2** schematically illustrates a possible structure of a container **200** for transport through an optical transmission network according to embodiments of the disclosure;
**Fig. 3** illustrates the possible combinations for determining node synchronization states according to embodiments of the disclosure;
Fig.4 schematically illustrates a possible mechanism for sequence initiation using DR election according to embodiments of the disclosure;
**Fig. 5(a)** schematically illustrates transmission of data packets along nodes coupled by links in a synchronized state according to embodiments of the disclosure;
**Fig. 5(b)** schematically illustrates transmission of data packets along nodes coupled by a segmented bus **501'** according to embodiments of the disclosure; and
**Fig. 6** illustrates processing steps for the proposed method for transmitting at least one client data packet through an optical transmission network according to embodiments of the disclosure.

### Detailed Description

A basic aspect in this disclosure is directed to data transmission in an optical network (e.g. Optical Ethernet (OE)) using fundamental elements, e.g. a container (slot) format for transport of aggregated packets and a container header containing header information (e.g. control information for the container). In particular, the header information may be extended to assign an identification number to a container. Furthermore, a fixed modulo-N numbering scheme (N being the total number of container identification numbers) may be introduced for synchronizing nodes to a repeated modulo-N container cycle. As mentioned above, a container may be reserved based on container reservation information which applies the modulo-N numbering scheme.

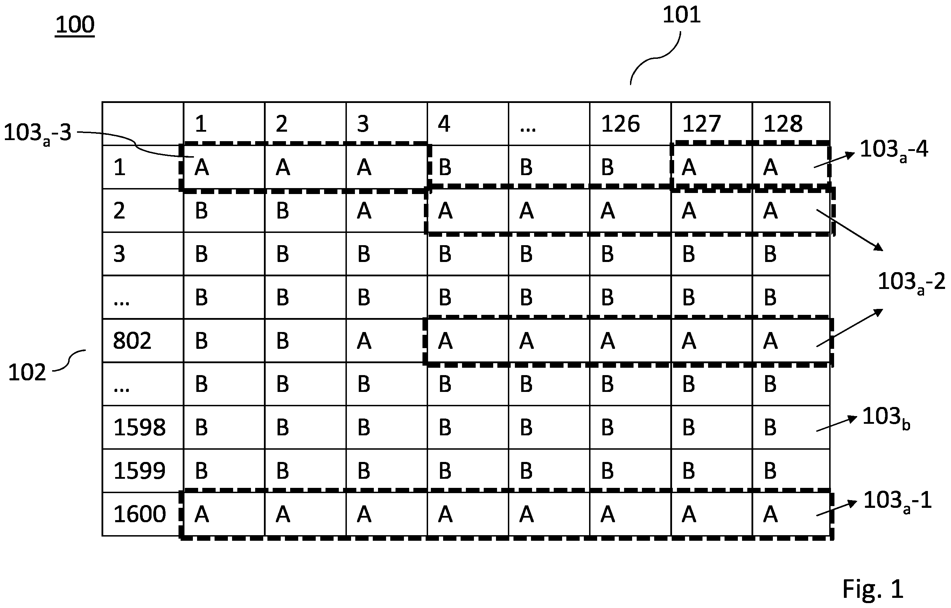

**Fig. 1** illustrates a possible implementation of a map **100** for reserving one or more containers for virtual connections according to embodiments of the disclosure. As mentioned above, virtual connections may be logically performed on physical links. The map **100** may provide or serve as the container reservation information according to which the virtual connections may be performed. In principle, a reserved connection can couple a plurality of nodes and allow each of them to use the reserved corresponding time slot(s) for transmission of client traffic to downstream nodes of the connection. On the other hand, if the connection and its container(s)/fractions thereof is exclusively reserved for coupling its endpoints (nodes 1 and 3 in connection 103ₐ₋3 in Fig. 1), the technique is tailored to CBR traffic which can use 100% of the reserved capacity. However, if the reserved connection is used for random packet traffic which does not fully use the reserved capacity, it is possible, that node 2 also inserts some packets to node 3 in the remaining container space reserved for this connection. This would most likely be for the same customer, ordering kind of a private, shared Ethernet link (unidirectional only in this case). The customer would then take his own measures how to arbitrate capacity between connections 1-3 and 2-3. Or he could even reserve a container for CBR and assign some subcontainers for a connection from 1 to 3 and others for a connection from 2 to 3.

As illustrated, the map **100** is demonstrated by a two-dimensional matrix with columns **101** associated with nodes in the network and rows **102** associated with container identification numbers. In some embodiments, the map **100** may be demonstrated by a two-dimensional matrix with columns **101** associated with container identification numbers and rows **102** associated with nodes in the network. It is noted that the map **100** applies a cyclic numbering scheme of modulo N, i.e. a same container identification number is repeated after a full container cycle has been reached. Thus, the containers are transmitted in a cyclic order of the respective container identification numbers.

It is further noted that the size of N depends on the bit rate to be supported on the link between nodes. In some cases, a minimum bit rate may be preferably considered. For example, the value of N may be determined by the ratio of the total transmission rate of the link to a minimum rate for the link or a connection (when considering only one container for transmission). Thus, e.g. supporting 1Gbps-granularity on a bus of 1.6Tbps leads to the value of N equal to 1600. In other words, 1600 containers (container slots) form a container cycle in this case, and the container identification numbers 1 to 1600 will repeat again after the container cycle has been reached. Although **Fig. 1** depicts the container-along-nodes matrix used for reservation of 1600 containers on a bus (i.e. one or more links between nodes of an optical network with a bus architecture) of 128 nodes, arbitrary numbers of containers and nodes may be also applicable for providing the map **100** (i.e. the container reservation information). Besides, in some embodiments, the map **100** may be also a one-dimensional array comprising either a single row/column associated with a container identification number and multiple columns/rows associated with nodes, or a single column/row associated with a node and multiple rows/columns associated with container identification numbers.

In addition, the map **100** distinguishes two different traffic classes to be implemented along the bus (e.g. a plurality of links in a bus topology), e.g. class-A traffic **103a-1, 103a-2, 103a-3, 103a-4** (which may be a constant-bit-rate (CBR) connection as indicated by letter "A") and class-B traffic **103b** (as indicated by letter "B", which may be delay-tolerant and connectionless traffic). A container which is not reserved for class-A traffic may be used for class-B traffic. For class-B traffic, the container destination may be set as needed. It is appreciated that each node has a (separate) matrix stored in a database (e.g. stored in a storing unit of the node) regarding traffic or connections associated with the node. For example, node 1 may store a matrix indicative of the connections **103a-1, 103a-3** of the class-A traffic, and node 3 may store a matrix indicative of the connections **103a-1, 103a-2, 103a-3, 103a-4** of the class-A traffic according to the map **100.** It should be noted that connections **103a-2, 103a-4** of the class-A traffic are not accessible to node 1. Class B traffic 103b can take any free container passing by.

Furthermore, a particular connection may preferably use the same container number as another connection in case of no nodes are overlapping in both connections such that reserved paths are not interfering with each other. For example, connection **103a-1** may be assigned to container number 1600, and connection **103ₐ-3** may be assigned to container number 1. In case of nonoverlapping connections (e.g. connections **103ₐ-3** and **103a-4),** the same container number (e.g. container number 1) may be reused as it proceeds down the bus. In the embodiment of **Fig. 1****,** the map **100** shows four class-A connections: connection **103a-1** indicating a 1Gbps connection from node **1** to node 128 where a single container is booked for the entire bus length, connection **103a-2** indicating a 2Gbps connection from node 3 to node 128 occupying 2 container identification (ID) numbers with exactly half the container cycle distance (i.e. 800) for this path and connections **103a-3, 103a-4** indicating a 1Gbps connection from node 1 to node 3 and a 1Gbps connection from node 127 to 128 using the same container identification (ID) number on nonoverlapping paths.

According to an embodiment, slot (container) identification number reservation may be distributed properly based on the link or bus characteristics (e.g. transmission rate) and/or transmission strategies. For example, distributing slot reservations for connections with higher rates than 1Gbps, e.g. connection **103a-2,** equally across the matrix, may lead to shorter delay times with increasing bit rates to fill a slot for transmission in the sender, but may require an allocation strategy to avoid fragmentation. Considering a bus rate of 1Tbps, a slot in the current design comprising approximately 100 000 bits may cause a delay of 100us for a 1 Gbps connection, a delay of 50us for a 2Gbps connection (using two container IDs) and a delay of 10us for a 10Gbps connection (using 10 container IDs). If neighboring slots were reserved, e.g. slots 2 and 3 instead of slots 2 and 802, for connection **103a-2,** fragmentation can be avoided at the cost of higher constant delay at the sender. In this case, a delay of 100 us may be caused for all bit rates, but a transmission mechanism with no (or very small) delay variation can still be provided. The operator is free to choose a suitable transmission strategy (equally distributed slot reservation or neighboring slot reservation) depending on e.g. a current link situation.

It is further appreciated that a distributed control protocol may be used to initiate and control synchronization state. If the OE network is segmented due to a link failure, every segment keeps functioning independently without interrupting the numbering sequence (of the container identification numbers), and the cycle continues using the same container identification numbers. Moreover, a protection path may use the same container number(s) as for the primary path on an opposite bus, which makes it easier for administrators to identify pairs of connections that belong to the same client.

In some embodiments, container reservation in a matrix (e.g. the matrix according to map **100**) may be performed by a centralized entity (e.g. a Network Management System (NMS)) or by distributed signaling (e.g. Generalized Multiprotocol Label Switching (GMPLS) signaling across a User Network Interface (UNI)), or a combination thereof. Once the reservation is made and the node is informed, it knows in advance when the next free container for a particular connection arrives (by monitoring its counter value)), and containers belonging to the same connection may arrive at equidistant intervals at their destination.

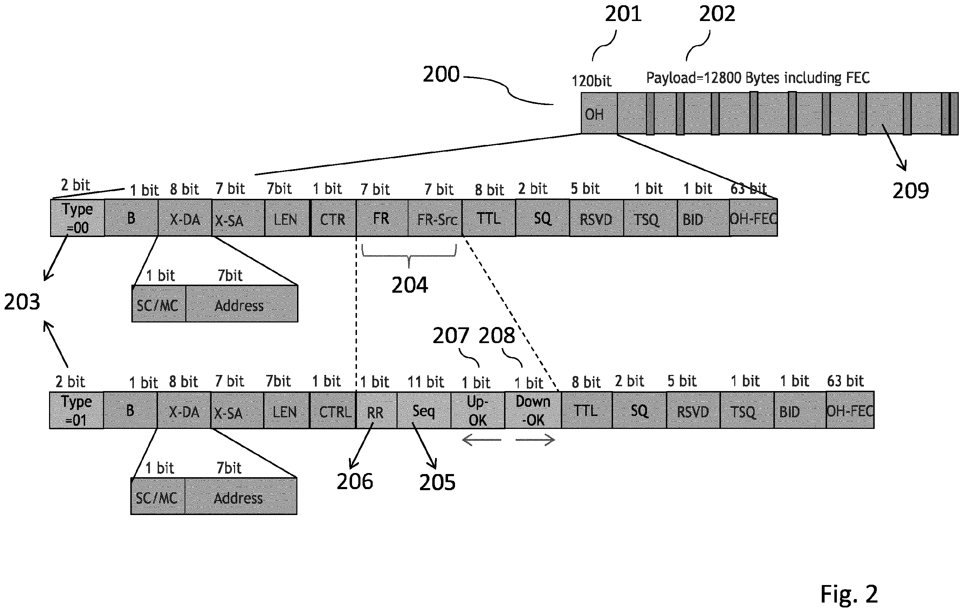

Fig.2 schematically illustrates a possible structure of a container 200 for transport through an optical transmission network according to embodiments of the disclosure. The container **200** represents an OE container structure used for carrying/encapsulating the client data packet(s) to be transmitted in the optical transmission network (e.g. an Optical Ethernet network). The container **200** comprises a container header **201** which includes control information such as address information (e.g. address information X-DA, X-SA, etc. as illustrated in the expansion of the container header **201**) and FEC information (indicated by "OH-FEC" in the expansion of the container header **201**) to protect the container header information. The container **200** also includes a container payload portion **202** which may be segmented into a plurality of subcontainers **209** (e.g. a standard OE container is subdivided into 80 subcontainers). The skilled person will appreciate that the detailed structure and functions of the container **200** have been disclosed in the previous European application No. 15191130.2, which is incorporated herein by reference in its entirety.

As some of the subcontainers **209** in the container payload portion **202** may be used to carry data packets from a client at a current node and some of the subcontainers **209** may be used to carry further data packets from other client(s) at other node(s), the container reservation information depicted in **Fig. 1** may be extended to include information regarding nodes and subcontainers of one or more containers, so that it is also possible to reserve portions of a container (e.g. one or more subcontainers of a container) for a connection.

Notably, the embodiment shows modifications to the container header **201.** For example, a prepended Type field **203** allows to change the header information between different formats. Herein, the Type field **203** includes two binary bits to switch the header **201** between two different formats, e.g. Type=00 for the "Normal" header as shown in the upper half of **Fig. 2** and Type=01 for the "Synchronization (Sync)" header for the numbering scheme which is the basis for class-A reservations/connections as shown in the lower half of **Fig. 2****.** It is appreciated that the use of two bits in the Type field **203** enables header alternation between up to four possible formats (i.e. four different formats in an alternating header cycle), and more bits may be considered to allow the header to be alternated between more formats to increase flexibility.

Furthermore, the FR (fair rate) and FR-Src (fair rate source) fields **204** may be reused in the alternate format (e.g. the Sync header). Normally, these fields are used by a congested node to throttle upstream stations to a fair share of the bus capacity (using the FR field) and advertise the address of the congested node (using the FR-Src field). Since containers having a length in the order of 100 000 bit may arrive approximately every 63 ns on a 1.6Tbps bus, changes of FR are signaled frequently enough as long as they are conveyed in every second or fourth container. Accordingly, the 14 bits of the FR/FR-Src fields **204** can be set free in the tightly length-limited header and reused for carrying a container identification number and control information which allows consistency checks as indicated in the "Sync" header in the lower half of **Fig. 2****.**

In detail, the Type field **203** indicates usage of FR/FR-Src fields **204.** According to the embodiment, Type value 00 may indicate "normal" fair-rate signaling, Type value 01 may indicate signaling of synchronization information instead of fair rate, Type values 10 and 11 may be reserved for future use. The skilled person may appreciate that the Type values can be assigned to indicate the various header formats in a different way. In some embodiments, Type value 01 may indicate "normal" fair-rate signaling, and Type value 00 may indicate signaling of synchronization information. Once the container header **201** is in the "Sync" header format, the 14 bits of the FR/FR-Src fields **204** are used for carrying a container identification and control information. In particular, the Seq field **205** in the "Sync" header format may carry the sequence number that is associated with the container identification number. When considering N=1600 containers to form a container cycle for the modulo-N numbering scheme, the Seq field **205** carries the sequence number in modulo-1600.

In an implementation of OE where the container header **201** does not provide enough bits for the sequence number, the alternating header format may be applied to carry the sequence number. However, it is also feasible to make the container header **201** a few bits longer to include the sequence number in the standard header format (e.g. the "Normal" header as shown in the upper half of **Fig. 2**). In this case, the alternating format may not be needed or may be omitted or used to signal other information.

It is noted that 11 bits in the Seq field **205** are used to address 1600 containers. More bits may be used in the Seq field **205** to carry the container identification for higher container numbers. Since the number synchronization occurs at every second container arrival (or less frequently if more alternative header formats are used), a node may maintain an internal counter which is increased at every container arrival and is compared with the received container identification number at every second arrival, e.g. whenever the Type value is "01".

In some embodiments, a RR field **206** comprising one bit (reset bit) may be optionally used to indicate whether the node should reset its counter value. If the RR bit is not set (RR bit=0), the container IDs of arriving containers having a header format of Type 01 may be overwritten with the local counter value (or with the local counter value increased by 1 depending on how the sequence numbering is defined), no matter whether the container identification number matched the counter value. Thereby, synchronization can be recuperated for the downstream part of the bus in case of upstream failures. On the other hand, when the RR bit is set (RR bit=1), the counter of the receiving node is updated with the received container identification number. That is, the RR field may be set to 1 to force the sequence counter to be reset at every node in case of out-of-synchronization situations. It is further noted that failures may be logged and reported in header flags and in control-channel messages.

Furthermore, the alternate header format may also (optionally) comprise one or more state monitoring bits for determining whether a node is synchronized with its neighboring node, e.g. the Up-OK field **207** and the Down-OK field **208.** According to the embodiment, each of the Up-OK and Down-OK fields has one bit (state monitoring bit) allocated to report to the upstream and downstream neighbor (which terminates and replaces the bit with its own value) whether the received container identification number matched the counter value of the sending node, thereby allowing nodes to monitor synchronization state. For example, Up-OK=1 may signal to a downstream station that the sending local station is in synchronization with the received sequence number from its upstream station. Down-OK=1 may signal to an upstream station that the sending downstream station is in synchronization with the received sequence number. It should be noted that due to propagation delay and asymmetries thereof, the control information may arrive with latency and may not have been generated at exactly the same point in time.

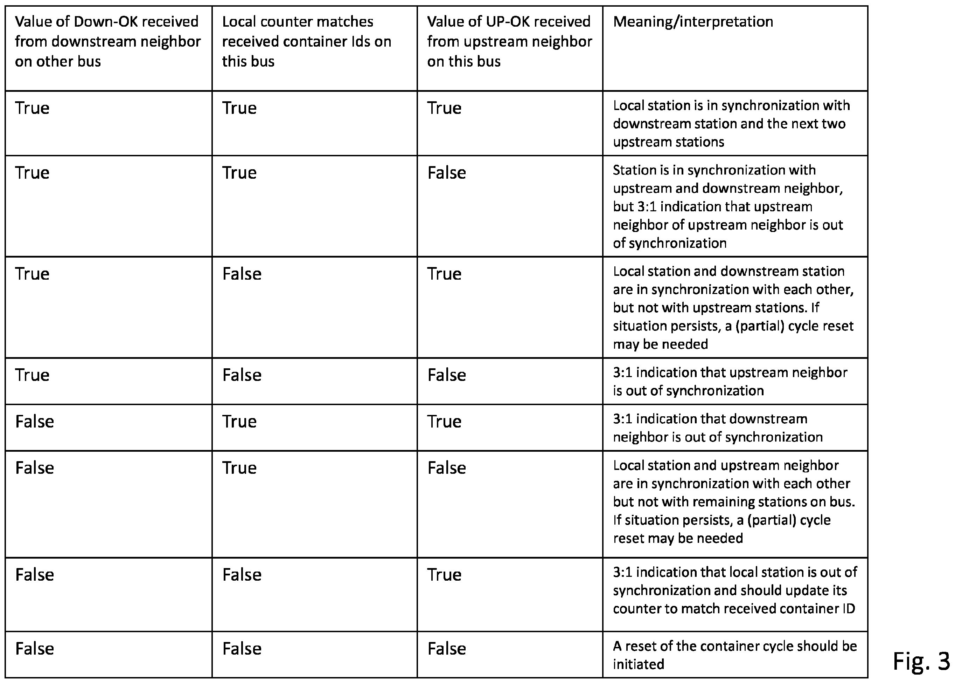

Accordingly, if a node receives an Up-OK signaling from its upstream neighbor on a bus, e.g. on bus A for uplink, it may be informed that the neighbor is in synchronization with the next but one station further upstream. On the other hand, if the node receives a Down-OK signaling from its downstream neighbor on another bus, e.g. bus B for downlink, it may be informed that the downstream counter matches the received container number on bus A, which is the counter value of the local node. However, feedback for the current container identification number from the downstream node is subject to propagation delay and may arrive at a number of containers later. It is further appreciated that combining the signaling of the one or more state monitoring bits **207, 208** with the container identification number **205** may enable error detection and potential recovery action for cycle resynchronization. **Fig.3** indicates possible combinations for determining node synchronization states according to embodiments of the disclosure. As listed herein, the interpretations of the combined signaling and container identification as well as the corresponding potential recovery actions can be easily looked up in case that self-healing is desired.

When recovery is not possible due to appearance of more than one error, a cycle reset may be initiated. The RR bit may be provided for this purpose. For example, a master station which is assigned as the sequence number generator may set this bit and initiate/restart the numbering sequence in one or more successive containers for initial startup, or after becoming aware of synchronization loss or being notified of synchronization loss via e.g. a control channel.

In some cases, it is beneficial that the network can organize itself in a plug-and-play manner and autonomously recover from failure without operator intervention. Several mechanisms are conceivable to assign the role of sequence number generator to a node in a self-organizing manner. These mechanisms may be capable to handle both ring and bus topologies. In a ring topology, there is no natural Head of Bus (HOB) node which serves as a sequence generator. If the network is segmented in case of failure, several sequence generators may coexist at the same time: one for each segment and potentially bus direction. Therefore, one or more HOB election protocols may be applied. In a carrier-grade network, it may be further possible to trace synchronization errors by monitoring to any node at any time and query the synchronization state and the current HOB. Therefore, it may be advantageous that the HOB is advertised in the network, so that any node can be informed regarding who is the current sequence master.

According to some embodiments, the Spanning Tree Protocol (STP) may be used for HOB election. A node which does not have an upstream neighbor, or which detects Loss of Signal (LOS) from an upstream neighbor, may increase its bridge priority thereby advertising itself as the root bridge and natural Head Of Bus (HOB). Subsequently, the node may start a new container sequence (sequence numbering) and set the RR field in a few successive containers. At the same time, STP may break the loop in a ring topology. This mechanism depends on the decision of a single node and may be vulnerable to intrusion or malfunctioning.

According to some embodiments, election protocols may be based on Designated Router (DR) election as used by routing protocols such as Intermediate System to Intermediate System (IS-IS) or Open Shortest Path First (OSPF) on a Local Area Network (LAN). These protocols allow authentication and build adjacencies if peer configuration is consistent. Nodes may elect the DR by exchanging messages and numerically comparing their media access control (MAC) addresses and configured priorities. Once the DR is elected, information of OE topology may be exchanged, and the DR can then identify the HOB and advertise the HOB in its Link State Protocol Data Units PDUs (LSPs) similar to advertising e.g. a Level-2 router. This may be performed by a minor extension to the LSP format. Once the HOB receives the LSP advertising itself as HOB, it may start generating a new sequence. In ring topologies, either STP may be applied to work in the background to break the loop, or nodes may delete the received messages which contain their own source address.

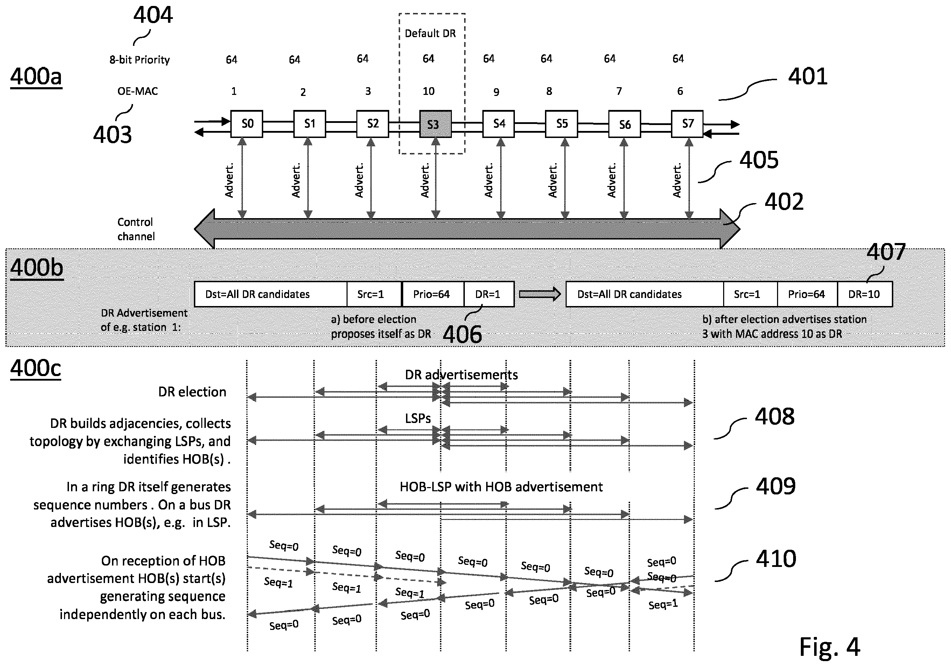

**Fig. 4** schematically illustrates a possible mechanism for sequence initiation using DR election according to embodiments of the disclosure. Network **400a** comprises a bus **401** (i.e. physical links connecting nodes in a bus topology) and eight stations (nodes S0 to S7) which advertise or broadcasts control messages **405** via a control channel **402.** Transmission of the control messages **405** may be based on a method disclosed in the previous European application No. 15306699.8, which is incorporated herein by reference in its entirety. The nodes S0 - S7 periodically advertise their node addresses (MAC addresses) **403,** priorities **404** and their current view of the DR address using a message format **400b.** In the embodiment, the message format **400b** is depicted for node S0. The node S0 may initially set itself as DR and numerically compare its priority and DR value **406** to the priorities and DR addresses received from other nodes (priority first with address as tie breaker). If the node receives a higher DR address, the node may advertise the higher address in its messages as indicated by **407.** By this way, the highest priority and/or MAC address can be finally elected and advertised by all stations (nodes).

After the DR has been properly elected, sequence initiation may be performed by exchanging messages between the nodes according to the signaling diagram **400c.** The selected DR may be advertised/broadcasted from the DR node (e.g. the node S3) to the other nodes. Subsequently, the DR may build logical adjacencies with the nodes S0 - S7 on the bus **401** and may exchange with the nodes the Link State Messages (LSPs) which may contain neighbor information. Thereby, the nodes are informed about the bus topology (i.e. topology information may be collected by exchanging LSPs). From this information, the DR can derive or identify the HOB(s) and then may advertise the identified HOB(s) in its own LSPs, as illustrated by the signaling **408** and **409.** Once the HOB(s) receive this advertisement, the HOB(s) may start initiating the container sequence alternating the header format or generating sequences independently on each bus. It should be noted that, in a ring topology, the DR itself may also generate sequence numbers, that is, the DR can take over the role and advertise itself as HOB on both buses, or on a bus it may delegate the function.

In some embodiments, for two bits in the Type field **203** of a container header, a third header format in the alternating header cycle may be used. In this format, the node address of the current sequence number generator can be conveyed (using e.g. 7 bits out of the free 14 bits as mentioned above) to each node in real time. Accordingly, remaining 7 bits may be available for another protocol field, which can be used to transmit the number of consecutive upstream stations that are in synchronization with each other. In case that the synchronous stations are contiguous up to the HOB (by signaling each node may know the number of hops to the HOB), and there is a mismatch between the local counter and the received container identification number, the local node may safely overwrite the local counter with the container identification number without restarting the container cycle (i.e. restarting the sequence numbering). By this way, a self-healing mechanism can be enabled to work in a sequential chain from the first erroneous node after the HOB right down to the end of the bus.

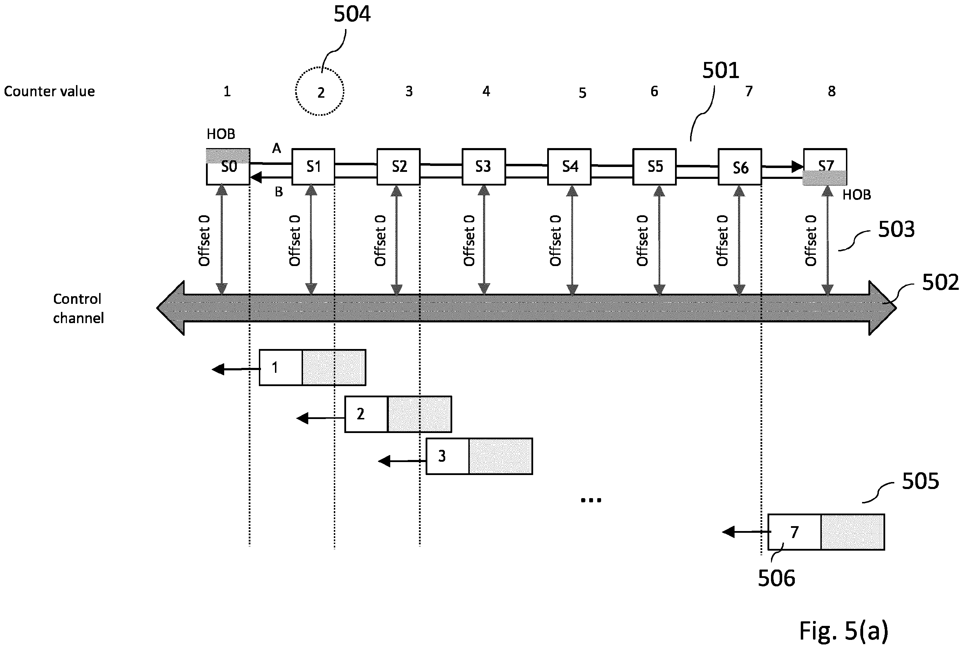

It is further appreciated that, in case of bus segmentation (e.g. caused by an interrupted link), newly elected per-segment HOBs may continue with their internal counter to maintain sequence synchronization in the respective segment to keep client service uninterrupted. However, some facts may be considered for reconnecting asynchronous segments. **Fig. 5(a)** schematically illustrates transmission of data packets along nodes coupled by links in a synchronized state according to embodiments of the disclosure. It should be noted that the network as configured in **Fig. 5(a)** may connect a plurality of nodes with links in a bus topology, which can implement one or more connections based on the container reservation information as mentioned above (e.g. the map **100**). Herein, the network is referred to a synchronized bus **501** connecting a plurality of nodes S0 - S7 where nodes S0 and S7 serve as HOBs for bus A **501a** (e.g. for uplink) and bus B **502b** (e.g. for downlink), respectively. For the case of bus B **502b,** node S7 is the HOB and one or more containers **505** are transmitted in the direction from the node S7 to the node S0. Each container **505** includes a container identification number **506** to indicate its associated time slot as mentioned above. Each node maintains a counter value **504** (which may be stored in a storing unit, e.g. memory, of the node) giving the number of the next expected container number.

For example, node S6 has a counter value of 7 to indicate that the next container to be received by S6 will have a container identification number of 7, and node S2 has a counter value of 3 to indicate that the next container to be received by S2 will have a container identification number of 3, and so on. It is assumed that the inter-node delay is exactly one container, i.e. the counter value of an upstream node is exactly one unit ahead of its downstream neighbor. It is noted that the container numbers **506** as shown are the numbers immediately before the arrival of the corresponding containers **505** at the downstream node, i.e. the container identification numbers **506** match the next expected sequence number (i.e. the counter value **504**) of the nodes.

Furthermore, the nodes also send offset information **503** regarding a difference between the counter value **504** and the container identification number **506** of the container received by the node (or between the the container identification number 506 and the counter value 504) to other nodes. In particular, the offset information **503** may be sent via a control channel **502.** Since the bus illustrated in **Fig. 5(a)** is in a synchronized state, all nodes S0 - S7 report a counter offset of 0.

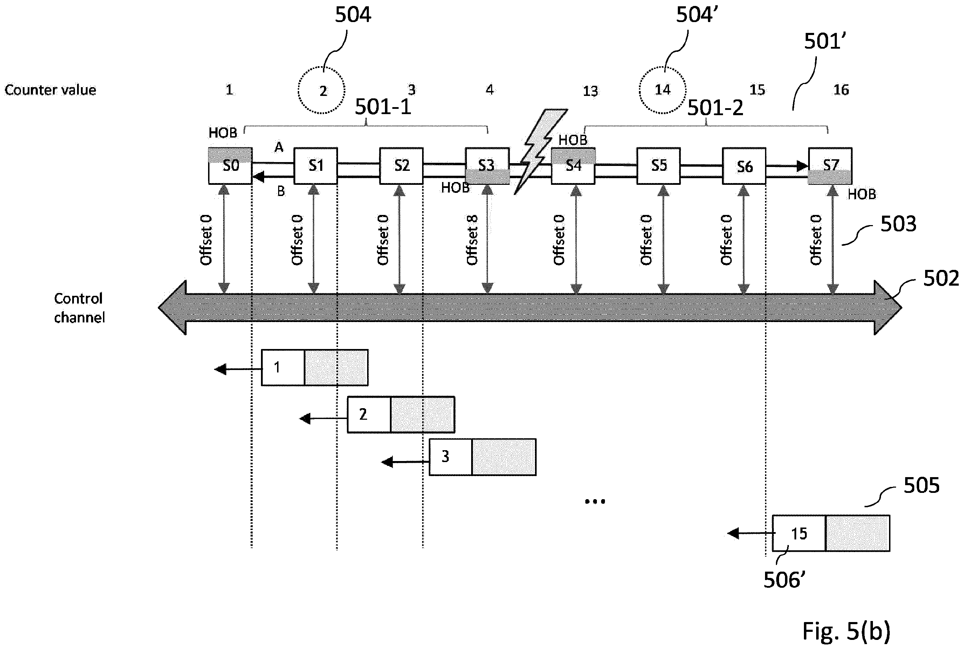

**Fig. 5(b)** schematically illustrates transmission of data packets along nodes coupled by a segmented bus **501'** according to embodiments of the disclosure. Notably, the bus **501'** may be similar to the bus **501** but is segmented into parts due to link segmentation (i.e. link failure). Herein, the bus **501** as shown in **Fig. 5(a)** is segmented into two sections **501-1** and **501-2** at the location between nodes S3 and S4, where nodes S0 and S3 are HOBs for the left segment **501-1** and nodes S4 and S7 are HOBs for the right segment **501-2.** It is assumed that when the segments are disconnected, the upper segment (e.g. the right segment **501-2**) drifts due to clock tolerances and the sequence numbering of this segment becomes ahead of the downstream segment (e.g. the left segment **501-**1). For example, in the right segment **501-2,** the counter value of the nodes S4 - S7 and the container identification numbers received by these nodes have been shifted by 8 units as indicated by **504'** and **506'** compared to **Fig. 5(a)** due to the re-initialization.

After reconnecting S3 and S4, node S3 sees the difference between its counter value (which represents the container identification number that S3 expects to receive) and the container identification number of the container actually received by S3 (or the difference between the container identification number and its counter value). In response, S3 further reports (to one or more other nodes) an offset of -8 units between its counter value and the container numbers received from node S4 (i.e. the offset can be determined by the difference between its counter value and the received container number, or between the received container number and the counter value). It should be noted that, as illustrated in **Fig. 5(b)****,** node S4 has a counter value of 13 which indicates the expected container ID of the container to be received by S4 from S5, whereas the container which has left S4 for S3 and will be received by S3 has a container ID of 12. Besides, S3 has a counter value of 4, indicating that S3 expects to receive a container having a container ID of 4. Thus, S3 sees a difference between the expected container ID (i.e. the counter value of 4) and the actually received container ID (i.e. 12) and reports a container ID offset between the expected container ID and the actually received container ID. As mentioned, the offset information may be sent/broadcasted to node S7 via the control channel **502,** and therefore S7 knows that the bus can be resynchronized by turning back its counter value by 8 units.

Accordingly, after physically reconnecting segments with potentially asynchronous container identification numbers, the nodes may report the offset between the received container identification number and the internal counter value. In order not to interrupt the service of a working downstream segment, an upstream sequence master may decide to change the numbering for a previously interrupted upstream segment until the reported offset is 0. The upstream master may instruct the downstream node to update its counter, or alternatively the master may take action himself. Thereby, segments can be resynchronized. As a result, the node which has lost synchronization with other nodes (e.g. due to failures in a link) can be informed and correct its counter value, so as to enable efficient resynchronization of the failed connection. It is further appreciated that the control channel may not rely on the numbering scheme. In this scenario, it is assumed that the control channel has a redundant connection to the network and can maintain connectivity to the nodes.

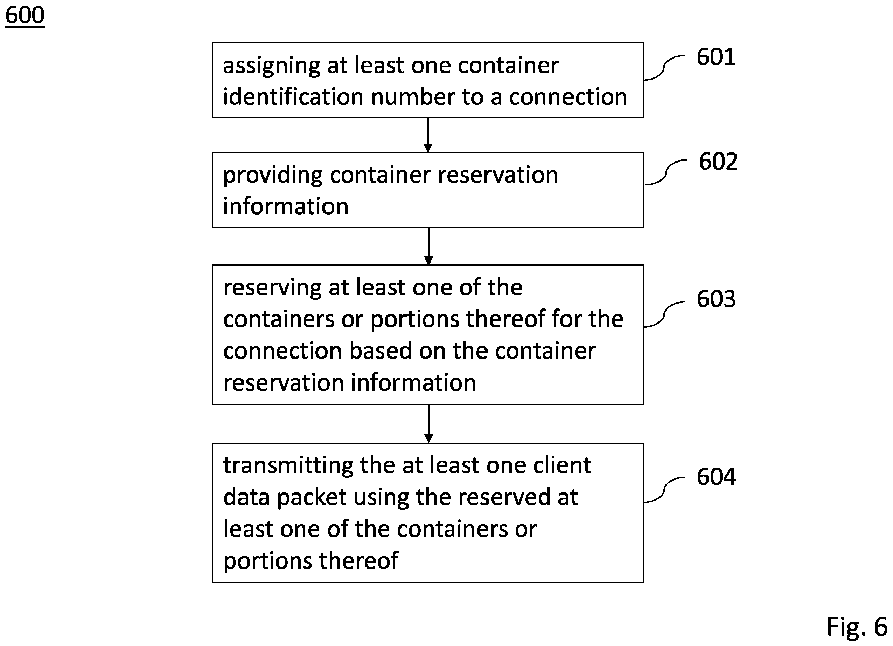

**Fig. 6** illustrates processing steps for the proposed method for transmitting at least one client data packet through an optical transmission network according to embodiments of the disclosure. The method **600** can be implemented by, for example, any of the nodes S0 - S7 as illustrated in **Fig. 4** and **Fig. 5****,** especially by the HOBs. The method **600** comprises assigning (step **601**) at least one container identification number to a connection coupling a plurality of nodes of the network. The method **600** also comprises providing (step **602**) container reservation information regarding the plurality of the nodes coupled by the connection and corresponding container identification numbers associated with the connection. The method **600** further comprises reserving (step **603**) at least one of the containers or portions thereof for the connection based on the container reservation information and transmitting (step **604**) the at least one client data packet using the reserved at least one of the containers or portions thereof (having the assigned at least one container identification number) in the optical transmission network.

As mentioned above, the one or more containers have respective one or more container identification numbers which are arranged in sequence using a cyclic numbering scheme, where a same container identification number is repeated after a container cycle has been reached. By this way, the one or more containers are transmitted in a cyclic order of the one or more respective container identification numbers.

It should be noted that the device features described above correspond to respective method features that may be however not explicitly described, for reasons of conciseness. The disclosure of the present document is considered to extend also to such method features.

Accordingly, by means of the proposed method and apparatus, delay variation can be significantly reduced and becomes negligible compared to pure packet networks with pseudo-wire transport. Also, the total delay may be significantly decreased. It should be noted that the higher the bit rate the shorter the delay. Thus, CBR service in OE may have a fixed delay in the sender for each bit rate, and the delay decreases with the bit rate. Furthermore, processing delay in intermediate OE nodes is therefore very small (around sub-microsecond range).

Moreover, compared to OTN, CBR connections with odd bit rates can be offered by partially reserving a container (i.e. reserving one or more subcontainers of a container). Unused subcontainers in partially filled containers can then be used by other connections or other traffic (e.g. class-B traffic) up to the termination point of the CBR connection (the destination address of the container is fixed by the CBR connection endpoint).

It is appreciated that the proposed method and apparatus are suitable for time-critical applications (e.g. CBR service) which are used for conveying Precision Time Protocol (PTP) messages for mobile network synchronization. By means of the proposed method and apparatus, the CBR service can also enable the transport service for TV contribution networks which have strong synchronization requirements among geographically distributed broadcasting studios. In addition, the disclosure is also beneficial to other technologies like the Internet of Things (loT) which may need low-jitter transport for the same reasons.

As a result, the proposed method and apparatus enable full integration of different classes of service within the same architecture by satisfying their individual native service requirements. In particular, the disclosure combines the flexibility of a packet network with the predictability and reliability of a leased-line service. Compared to prior art, integration is performed by putting the related technologies on an equal footing with each other instead of encapsulating one technology and transporting it over another.

It should be further noted that the description and drawings merely illustrate the principles of the proposed device. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed device. Furthermore, all statements herein providing principles, aspects, and embodiments of the invention, as well as specific examples thereof, are intended to encompass equivalents thereof.

## Claims

1. A method for transmitting at least one client data packet through an optical transmission network having multiple nodes by synchronously placing the at least one client packet in one or more containers that are routed through the network, wherein a container is associated with a time slot allocated for transmitting the container through the network and comprises a container identification number in a container header of the container to identify the time slot associated with the container, wherein the one or more containers having respective one or more container identification numbers arranged in sequence using a cyclic numbering scheme that repeats a same container identification number after a container cycle has been reached, so that the one or more containers are transmitted in a cyclic order of the one or more respective container identification numbers, the method comprising:
assigning a container identification number to a connection coupling a plurality of nodes of the network;
providing container reservation information regarding the plurality of the nodes coupled by the connection and a corresponding container identification number associated with the connection;
reserving at least one of the containers or portions thereof for the connection based on the container reservation information; and
transmitting the at least one client data packet using the reserved at least one of the containers or portions thereof in the optical transmission network.

2. The method of claim 1, wherein a number of containers in the container cycle is determined based on a transmission rate on links between nodes.

3. The method of claim 1 or 2, wherein the connection is a constant-bit-rate (CBR) connection, and the at least one of the containers or portions thereof is reserved for the CBR connection for transmitting the at least one client data packet.

4. The method of any of claims 1 - 3, wherein a plurality of containers is reserved for the connection, wherein the containers have corresponding container identification numbers uniformly distributed across the container cycle.

5. The method of any of claims 1 - 4, wherein each node maintains a counter value indicative of an expected container identification number carried by a container which a corresponding node expects to receive next, or of the last received container identification number.

6. The method of claim 5, further comprising comparing the counter value with the container identification number of a received container for determining a synchronization state of a node.

7. The method of any previous claim, wherein the connection couples a first node and a second node in the optical transmission network, and the at least one of the containers or portions is reserved to transmit one or more client packets from the first node to the second node in the optical transmission network.

8. The method of claim 5 or 6, wherein the container header comprises a reset bit, the method further comprising, according to the reset bit, updating the counter value of the node that receives a container with the container identification number of the received container; and/or wherein the container header comprises one or more state monitoring bits for determining whether a node is synchronized with its neighboring node, the method further comprising, according to the one or more state monitoring bits, overwriting the container identification number of a received container with the counter value of the node that received the container, or updating the counter value of the node that received a container with the container identification number of the received container.

9. The method of any of claims 6 - 8, further comprising sending, via a control channel to one or more other nodes, offset information regarding a difference between the container identification number of a container received by the node and the counter value of the node.

10. The method of any of claims 1 - 9, wherein the container header of the containers is alternated between two or more header formats, wherein the container identification number for a container is included in an alternate format of the container header of the container, and/or the reset bit and the state monitoring bits are included in the alternate format of the container header.

11. The method of any of claims 7 - 10, further comprising selecting a main node to initiate a reset of a numbering sequence and/or to set the reset bit in a container header, wherein the numbering sequence is set to a value associated with the container identification number in a container header.

12. Apparatus for an optical transmission network for transmitting at least one client data packet through the optical transmission network by synchronously placing the at least one client packet in one or more containers that are routed through the network, wherein a container is associated with a time slot allocated for transmitting the container through the network and comprises a container identification number in a container header of the container to identify the time slot associated with the container, wherein the one or more containers having respective one or more container identification numbers arranged in sequence using a cyclic numbering scheme that repeats a same container identification number after a container cycle has been reached, so that the one or more containers are transmitted in a cyclic order of the one or more respective container identification numbers, the apparatus comprising:
a client interface configured to obtain the at least one client data packet;
a storage unit configured to store container reservation information regarding a plurality of nodes of the network coupled by a connection and a corresponding container identification number assigned to the connection;
a processing unit configured to reserve, based on the container reservation information, at least one of the containers or portions thereof for the connection; and
an optical output interface coupled with the optical transmission network and configured to transmit the at least one client data packet using the reserved at least one of the containers or portions thereof in the optical transmission network.

13. The apparatus of claim 12, wherein the apparatus is employed in a node of the optical transmission network and further comprises an optical input interface coupled with the optical transmission network and configured to receive the one or more containers, wherein the storage unit is further configured to maintain a counter value indicative of an expected container identification number carried by a container which the node expects to receive next, or of the last received container identification number.

14. The apparatus of claim 13, wherein the processing unit is further configured to compare the counter value with the container identification number of a received container for determining a synchronization state of the node.

15. The apparatus of claim 14, wherein the optical output interface is further configured to send, via a control channel, offset information regarding a difference between the container identification number of the last container received by the node and the counter value of the node to one or more other nodes.
